(19) Europäisches Patentamt
European Patent Office
Office européen des brevets

(11) Publication number: **0 219 175**
**B1**

# (12) EUROPEAN PATENT SPECIFICATION

(45) Date of publication of the patent specification: **27.12.89**

(51) Int. Cl.[4]: **B 23 K 35/362**

(21) Application number: **86201782.9**

(22) Date of filling: **14.10.86**

(54) **Soldering compositions.**

(30) Priority: **15.10.85 NL 8502818**

(43) Date of publication of application:
**22.04.87 Bulletin 87/17**

(45) Publication of the grant of the patent:
**27.12.89 Bulletin 89/52**

(84) Designated Contracting States:
**AT BE CH DE ES FR GB IT LI NL SE**

(56) References cited:
**SOVIET INVENTIONS ILLUSTRATED, section Ch, week C 06, 19 March 1980, DERWENT PUBLICATIONS LTD. London M23**

(73) Proprietor: **SHELL INTERNATIONALE RESEARCH MAATSCHAPPIJ B.V., Carel van Bylandtlaan 30, NL- 2596 HR Den Haag (NL)**

(72) Inventor: **van Leeuwen, Petrus W.N.M., Badhuisweg 3, NL- 1031 CM Amsterdam (NL)**

(74) Representative: **Aalbers, Onno, P.O. Box 302, NL- 2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).



LIBER, STOCKHOLM 1989

**Description**

Soldering compositions incorporating one or more fluxes are known. A very well-known product is cored solder with a flux of rosin, which usually also includes an activator.

There is increasing resistance on environmental grounds to the use of cored solder and other sorts of soft, fluxed solder of lead-tin alloys. The required high temperatures give rise to decomposition products, which are released to the atmosphere in the form of sharp, pungent smoke (formaldehyde). For this reason, soldering tends to be considered unacceptable work.

To create a substitute for rosin, it has already been proposed in GB-A-1 550 648 to employ an ester of a polyhydric alcohol, e.g. penta erythritol, as a soldering flux. There are, however, a number of practical problems associated with this proposal. For example, the flux action is relatively weak, so that flux activators are also needed. Moreover, a sticky and non-transparent residue remains behind after soldering and hampers the visual inspection of the soldering point.

It is known from Russian patent application SU-A-664 794 to use organo-siloxane block copolymers having the general formula $R_aR'_{(3-a)}$-Si-O-$[CH_3SiC_6H_5]_m$-$[O-CH_3SiCH_3]_n$-O-$SiR_aR'_{(3-a)}$
wherein
R = $CH_3$,
R' =$C_6H_5$,
a = 0 - 3, m 1-15 and n 0 - 20, as flux component to protect the soldered work against oxidation.

The flux action is relatively weak. To overcome this drawback a mixture comprising lead stearate and a complex ester of glycerol with fatty acids and a condensation product of phosphoric acid with choline or ethanolamine is used as flux activator. Another drawback is the relatively low stability of this flux. Therefore, 2,6-di-tert.-butyl-4-methylphenol is added as antioxidant.

It is an object of the present invention to overcome these drawbacks and to this end the invention provides a soldering composition incorporating a flux, characterized in that as flux at least one compound is employed with the general formula

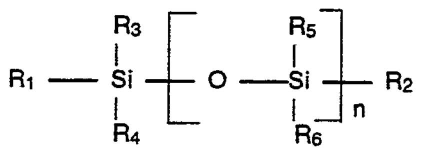

in which n is a number from 0 to 6, all groups $R_1$ to $R_6$ are identical or different aryl groups, of which at least one carries a $COOR_7$ substituent, in which $R_7$ represents hydrogen, an alkyl or aryl group with a maximum of 12 carbon atoms, and in which $R_1$ and $R_2$ can be one and the same aryl group, thus forming a cyclic compound. Suitable $R_1$ to $R_6$ aryl groups are phenyl, naphthyl, anthracyl, phenanthryl, and higher condensed aromatic systems in so far as they are not carcinogenic. Phenyl groups are the most preferred. The number n is preferably smaller than 3, most preferably 0 or 1. In general, COOH substituents perform better than ester groups. If ester groups are used, there is a preference for alkyl esters in which the alkyl group does not contain more than 6 carbon atoms; for example methyl, isopropyl, n-propyl, ethyl or isobutyl. The number of $COOR_7$ substituents in the flux compound will preferably not exceed 1.

Examples of suitable compounds are:

4-carboxyphenyl-triphenyl silane, 3-carboxyphenyl-triphenyl silane,
4-methoxycarbonyl-phenyltriphenyl silane,
3-isopropoxycarbonylphenyl-triphenyl silane,
4-ethoxycarbonylphenyl-triphenyl silane,
4,4'-bis-carboxyphenyl-diphenyl silane,
4,4'-bis(ethoxycarbonylphenyl)-diphenyl silane,
4,4'-bis(carboxyphenyl)-tetraphenyl siloxane,
4,3'-bis(carboxyphenyl)-tetraphenyl siloxane,
4-carboxyphenyl-pentaphenyl siloxane,
4-carboxyphenyl-4'-methoxyphenyl-diphenyl silane,
4-carboxyphenyl-6'-bisphenyl-diphenyl silane,
4-carboxynaphthyl-triphenyl silane,
4,4'-bis(carboxyphenyl)-tetranaphthyl siloxane,
4,4'-bis(carboxyphenyl)-hexaphenyl siloxane and
4-carboxyphenyl-trianthracyl silane.

All these compounds can be synthesized in a known manner: condensation of triphenyl silicon chloride with p-chlorotoluene in the presence of a reducing metal, followed by oxidation of the methyl group with molecular oxygen gives

4'-carboxyphenyltriphenyl silane; corresponding siloxanes can be prepared via condensation of silicon chlorides by extraction of chlorine with water with the release of hydrochloric acid.

The soldering composition according to the invention can be employed in the customary forms, e.g. as wire, tape, sheet, tablet, disc, etc. The scope of the invention also includes the preparation of the composition in situ during soldering. This is particularly attractive in the production of printed wiring in which a wiring pattern consisting of the flux of this invention is applied to a conducting surface. The conductor surface not covered by the pattern is then etched away and finally the electronic components and solder are applied. Flux and solder then react together at the solder points, thus forming the composition of the invention in-situ. Analoguous in-situ formation is in principle also possible in other applications comprising the stepwise application of flux and solder.

In those cases in which the fluxing action of the compounds used in the invention is still not optimum, one of the customary activators can be added. In addition, hardeners can also be incorporated in the composition.

The invention will now be further illustrated with the aid of a few examples.

Examples:

Tests were carried out with 60/40 lead/tin solder at 250 and 300°C. The spread in $cm^2$ of 0.172 g solder with 0.005 g flux on a 5 x 5 cm copper plate was determined, and also the wetting time, in seconds, with a meniscograph, by dipping to a depth of 2 mm a 1 cm wide copper strip cleaned with IPA. The smoke evolution was observed and the formaldehyde generation was measured after pyrolysis for 1 minute at 350°C in an oven and sucking away the entire vapour phase for 10 minutes. The vapour was absorbed in water and the formaldehyde concentrate was measured colorimetrically according to the method of L.C. Thomas and G.J. Chamerman ("Colorimetric Chemical Analysis Methods, 1974, Tintometer Sales Ltd, England").

The fluxing action of the following compounds was tested:

1. 4-carboxyphenyl-triphenyl silane
2. 3-carboxyphenyl-triphenyl silane
3. 3-methoxycarbonylphenyl-3'-carboxyphenyl-diphenyl silane
4. 4,4'-dicarboxyphenyl-diphenyl silane
5. 4-carboxyphenyl-pentaphenyl siloxane, and for comparison:

a. a mixture of rosin and di/triethyl ammonium bromide as flux activator
b. a mixture of penta-erythritol-tetrabenzoate and the flux activator mentioned in system a
c. penta-erythritol-tetrabenzoate.

The test results are given in the table in which the pyrolysis data are represented by a relative scale:

++ objectionable quantities
+ much
± noticeable
- little or none

It can also be pointed out that system b is corrosive in the standard test BS 5625 (21 days), due to the presence of chlorides. This does not apply to compounds 1 to 5.

**Table**

| | Spread | | Wetting | | Pyrolysis | |
|---|---|---|---|---|---|---|
| | 250°C | 300°C | 250°C | 300°C | $CH_2O$ | Smoke |
| 1 | 1.0 | 1.2 | 1.4 | 0.5 | - | - |
| 2 | 0.4 | 0.7 | 1.5 | 0.7 | - | - |
| 3 | 1.0 | 0.7 | 1.6 | 0.7 | - | - |
| 4 | 0.9 | 1.0 | 1.2 | 0.6 | - | - |
| 5 | 0.9 | 1.2 | 1.9 | 0.7 | - | - |
| a | 1.0 | 0.9 | 0.6 | 0.4 | ++ | ++ |
| b | 1.1 | 0.8 | 1.3 | 1.1 | ± | ± |
| c | 0.2 | 0.3 | 5.2 | 3.9 | ± | ± |

**Claims**

1. Soldering composition incorporating a flux, characterized in that as flux at least one compound is employed with the general formula

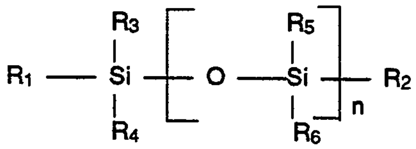

in which n is a number from 0 to 6, all groups $R_1$ to $R_6$ are identical or different aryl groups, of which at least one carries a $COOR_7$ substituent, in which $R_7$ represents hydrogen, an alkyl or aryl group with a maximum of 12 carbon atoms, and in which $R_1$ and $R_2$ can be one and the same aryl group, thus forming a cyclic compound.

2. Composition according to claim 1, characterized in that all groups $R_1$ to $R_6$ are phenyl groups.

3. Composition according to claim 1 or 2, characterized in that n is zero or one.

4. Composition according to claims 1 to 3, characterized in that the compound contains one or two COOH substituents.

5. Soldering wire, tape, sheet, rod, tablet or disc consisting of a composition according to one or more of claims 1 to 4.

**Patentansprüche**

1. Lötzusammensetzung mit einem Gehalt an einem Flußmittel dadurch gekennzeichnet, daß als Flußmittel wenigstens eine Verbindung mit der allgemeinen Formel:

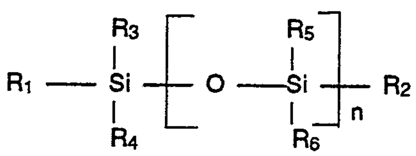

,

worin n eine Zahl von 0 bis 6 bedeutet, alle Gruppen $R_1$ bis $R_6$ gleiche oder verschiedene Arylgruppen darstellen, von denen wenigstens eine einen $COOR_7$-Substituenten trägt, worin $R_7$ Wasserstoff, eine Alkyl- oder Arylgruppe mit maximal 20 Kohlenstoffatomen bedeutet, und worin $R_1$ und $R_2$ ein-und dieselbe Arylgruppe sein können und solcherart eine cyklische Verbindung ausbilden, verwendet wird.

2. Zusammensetzung nach Anspruch 1 dadurch gekennzeichnet, daß alle Gruppen $R_1$ bis $R_6$ Phenylgruppen sind.

3. Zusammensetzung nach Anspruch 1 oder 2, dadurch gekennzeichnet, daß n 0 oder 1 ist.

4. Zusammensetzung nach den Ansprüchen 1 bis 3, dadurch gekennzeichnet, daß die Verbindung eine oder zwei COOH-Substituenten enthält.

5. Lötdraht, -band, -blatt, -stab, -tablette oder -scheibe, bestehend aus einer Zusammensetzung nach einem oder mehreren der Ansprüche 1 bis 4.

**Revendications**

1. Composition pour soudage incoporant un fondant, caractérisée en ce que, comme fondant, on utilise au moin un composé présentant la formule générale

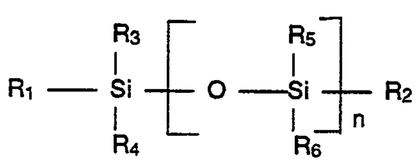

dans laquelle n est un nombre de 0 à 6, tous les groupes $R_1$ à $R_6$ sont des groupes aryles, identiques ou différents, dont au moins l'un porte un substituant $COOR_7$, dans lequel $R_7$ représente de l'hydrogène, un groupe alkyle ou aryle avec un maximum de 12 atomes de carbone, et dans laquelle $R_1$ et $R_2$ peuvent être unis et le même groupe aryle, en formant ainsi un groupe cyclique.

2. Composition selon la revendication 1, caractérisée en ce que tous les groupes R1 à R6 sont des groupes phényles.

3. Composition selon la revendication 1 ou 2, caractérisée en ce que n est zéro ou un.

4. Composition selon les revendications 1 à 3, caractérisée en ce que le composé contient un ou plus d'un substituant COOH.

5. Fil, ruban, feuille, barre, pastille ou rondelle constitués d'une composition selon l'une ou plus d'une des revendications 1 à 4.